# EUROPEAN PATENT APPLICATION

(11) **EP 1 777 836 A1**
(43) Date of publication of application: **25.04.2007**
(21) Application number: 04771589.1
(22) Date of filing: 12.08.2004
(51) Int. Cl.: H04B 5/02, H04B 1/59, G06K 17/00

(54) **DATA COMMUNICATION APPARATUS AND DATA COMMUNICATION METHOD**

(71) Applicant: MITSUBISHI DENKI KABUSHIKI KAISHA, Chiyoda-ku, Tokyo 100-8310 (JP)
(72) Inventor: KAMEMARU, Toshihisa, Mitsubishi Electric Corporati, Tokyo 100-8310 (JP); TAKAHATA, Yasushi, Mitsubishi Electric Corporati, Tokyo 100-8310 (JP); SUEMATSU, Noriharu, Mitsubishi Electric Corporati, Tokyo 100-8310 (JP); SOGABE, Yasushi, Mitsubishi Electric Corporati, Tokyo 100-8310 (JP); KONISHI, Yoshihiko, Mitsubishi Electric Corporati, Tokyo 100-8310 (JP); OHTSUKA, Masataka, Mitsubishi Electric Corporati, Tokyo 100-8310 (JP); HAYASHI, Ryoji, Mitsubishi Electric Corporati, Tokyo 100-8310 (JP)
(74) Representative: Pfenning, Meinig & Partner GbR
(86) International application number: PCT/JP2004/011614
(87) International publication number: WO 2006/016411

(57) **Abstract**

A data communication apparatus generates a signal for response with a frequency different from that of a signal for power supply or that of a data signal, and receives a data signal transmitted from a noncontact IC card 2 at the timing of transmitting the signal for response. This makes it possible to demodulate the data signal transmitted from the noncontact IC card 2 without being affected by a modulated signal transmitted from a second data communication apparatus.

## Description

### TECHNICAL FIELD

The present invention relates to a data communication apparatus and a data communication method with a function of supplying power to noncontact radio communication equipment (such as a noncontact IC card, RF tag, electronic tag, and remote keyless entry).

### BACKGROUND ART

A conventional data communication apparatus includes an ASK modulator for carrying out ASK modulation of an RF signal, or a radio frequency signal, and for outputting a modulated signal; an amplifier for amplifying the modulated signal output from the ASK modulator; and an antenna for transmitting the modulated signal amplified by the amplifier to noncontact radio communication equipment.

The noncontact radio communication equipment, when a data communication apparatus is installed in its vicinity (a distance about several tens of centimeters to the data communication apparatus), receives a modulated signal transmitted from the data communication apparatus, obtains driving power by rectifying the modulated signal, and stores the power in its built-in capacitor.
After that, utilizing the power stored in the capacitor, the noncontact radio communication equipment can carry out such processing as modulating data at the timing of receiving a CW (unmodulated continuous wave), which is a signal for response, from the data communication apparatus, and transmitting the modulated data to the data communication apparatus (see Non-Patent Document 1, for example).

Thus, when receiving the modulated signal transmitted from the noncontact radio communication equipment, the data communication apparatus transmits the CW, the signal for response, to the noncontact radio communication equipment. In this case, when a second data communication apparatus is located at a place several kilometers from the data communication apparatus, it can receive a modulated signal from the second data communication apparatus at the timing it receives the modulated signal from the noncontact radio communication equipment.
When the data communication apparatus receives the modulated signal from the second data communication apparatus at the timing it receives the modulated signal from the noncontact radio communication equipment, the modulated signal causes an interference wave, thereby sometimes making it impossible to demodulate the modulated signal transmitted from the noncontact radio communication equipment correctly.

When a plurality of data communication apparatuses are installed and if the distances between them are short, different frequencies are normally assigned to prevent mutual interference. However, since the number of the assignable frequencies is limited, the same frequency must sometimes be assigned even when the mutual distances are about several kilometers.
Here, the distance that can prevent the mutual interference is about several tens of kilometers.

Non-Patent Document 1: MWE 2003 Microwave Workshop Digest, "Subminiature RFID Chip: Mu Chip", by Mitsuo Usami, Central Research Laboratory, Hitachi Ltd., published 2003, pp.235-238.

With the foregoing configuration, the conventional data communication apparatus has a problem of being unable to demodulate the modulated signal transmitted from the noncontact radio communication equipment correctly, if it receives the modulated signal from the second data communication apparatus at the timing of receiving the modulated signal from the noncontact radio communication equipment. This is because the modulated signal from the second data communication apparatus becomes the interference wave.

The present invention is implemented to solve the foregoing problem. Therefore it is an object of the present invention to provide a data communication apparatus and data communication method capable of demodulating the modulated signal transmitted from the noncontact radio communication equipment without being affected by the modulation wave transmitted from the second data communication apparatus.

### DISCLOSURE OF THE INVENTION

The data communication apparatus in accordance with the present invention has a signal-for-response generating means for generating a signal for response with a frequency different from that of a data signal generated by a data signal generating means, and receives a data signal transmitted from noncontact radio communication equipment while a transmitting means is transmitting the signal for response.

This offers an advantage of being able to demodulate the data signal transmitted from the noncontact radio communication equipment without being affected by a modulated wave transmitted from a second data communication apparatus.

### BRIEF DESCRIPTION OF THE DRAWINGS

FIG. 1 is a block diagram showing a configuration of a data communication apparatus of an embodiment 1 in accordance with the present invention;
FIG. 2 is a flowchart illustrating a data communication method of the embodiment 1 in accordance with the present invention;
FIG. 3 is a diagram illustrating a cell arrangement in the embodiment 1 in accordance with the present invention;
FIG. 4 is a diagram illustrating relationships between frequency and power;
FIG. 5 is a diagram illustrating peak power of transmission signals;
FIG. 6 is a diagram illustrating input and output of radio waves;
FIG. 7 is a block diagram showing a configuration of a data communication apparatus of an embodiment 2 in accordance with the present invention;
FIG. 8 is a diagram illustrating data demodulation processing;
FIG. 9 is a diagram illustrating data demodulation processing;
FIG. 10 is a diagram illustrating data demodulation processing;
FIG. 11 is a diagram illustrating data demodulation processing; and
FIG. 12 is a diagram illustrating data demodulation processing.

### BEST MODE FOR CARRYING OUT THE INVENTION

The best mode for carrying out the invention will now be described with reference to the accompanying drawings to explain the present invention in more detail.

### EMBODIMENT 1

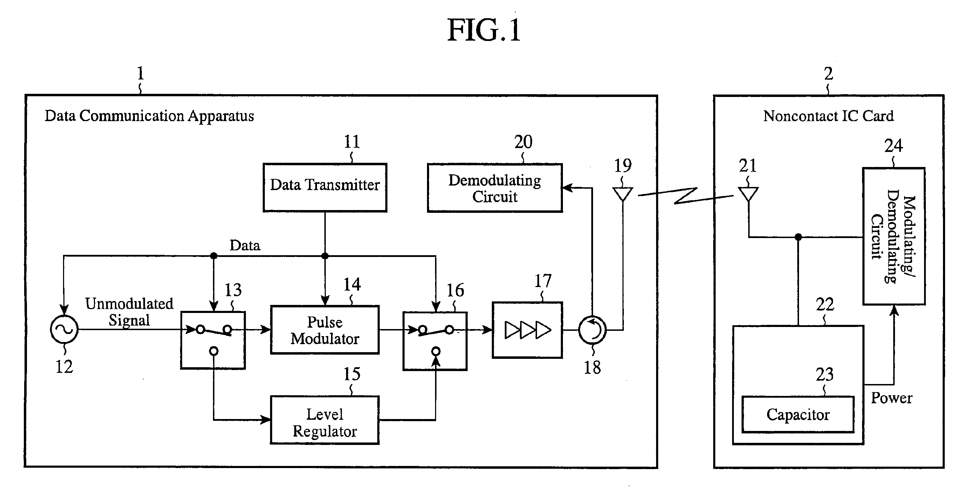

FIG. 1 is a block diagram showing a configuration of a data communication apparatus of an embodiment 1 in accordance with the present invention.

In FIG. 1, a data communication apparatus 1 such as a reader/writer apparatus transmits a signal for power supply (CW: unmodulated continuous wave), a data signal (modulated wave) or a signal for response (CW: unmodulated continuous wave) to a noncontact IC card 2.
Receiving the signal for power supply transmitted from the data communication apparatus 1, the noncontact IC card 2, the noncontact radio communication equipment, charges its built-in capacitor with the signal for power supply. After that, utilizing the charge stored in the capacitor as a power source, the noncontact IC card 2 carries out processing such as demodulating the data signal transmitted from the data communication apparatus 1.

A data transmitter 11 of the data communication apparatus 1 outputs transmission data such as a command, fixed form data for a power supply or fixed form data for response, which are to be transmitted to the noncontact IC card 2.
An RF signal oscillator 12 oscillates an unmodulated signal with frequency f₁ when the data output from the data transmitter 11 is the transmission data such as a command, or when the data output from the data transmitter 11 is the fixed form data for power supply. In addition, the RF signal oscillator 12 oscillates an unmodulated signal with frequency f₄ when the data output from the data transmitter 11 is the fixed form data for response.

When the data transmitter 11 outputs the transmission data, a changeover switch 13 supplies a pulse modulator 14 with the unmodulated signal with frequency f₁ oscillated by the RF signal oscillator 12. On the other hand, when the data transmitter 11 outputs the fixed form data for power supply or fixed form data for response, the changeover switch 13 supplies a level regulator 15 with the unmodulated signal with frequency f₁ or the unmodulated signal with frequency f₄, which are oscillated by the RF signal oscillator 12

The pulse modulator 14 carries out pulse modulation (such as ASK modulation) of the unmodulated signal with frequency f₁ oscillated by the RF signal oscillator 12 in response to the transmission data output from the data transmitter 11, and outputs a modulated signal.
The level regulator 15 adjusts the peak power of the unmodulated signal with frequency f₁, or frequency f₄ oscillated by the RF signal oscillator 12, and makes the peak power of the unmodulated signal greater than the peak power of the modulated signal output from the pulse modulator 14.

When the data transmitter 11 outputs the transmission data, a changeover switch 16 supplies an amplifier 17 with the modulated signal output from the pulse modulator 14. On the other hand, when the data transmitter 11 outputs the fixed form data for power supply or fixed form data for response, the changeover switch 16 supplies the amplifier 17 with the unmodulated signal output from the level regulator 15.

The amplifier 17 amplifies the modulated signal or unmodulated signal output from the changeover switch 16.
The data transmitter 11, RF signal oscillator 12, changeover switches 13 and 16, pulse modulator 14 and amplifier 17 constitute a data signal generating means.
In addition, the data transmitter 11, RF signal oscillator 12, changeover switches 13 and 16, level regulator 15 and amplifier 17 constitute a signal-for-power-supply generating means and a signal-for-response generating means.

A circulator 18 supplies the modulated signal or unmodulated signal output from the amplifier 17 to the antenna 19, and the modulated signal received by the antenna 19 to a demodulating circuit 20.
The antenna 19 transmits the modulated signal or unmodulated signal amplified by the amplifier 17 to the noncontact IC card 2, and receives the modulated signal transmitted from the noncontact IC card 2. The circulator 18 and antenna 19 constitute a transmitting means and receiving means.
The demodulating circuit 20 demodulates data from the modulated signal received by the antenna 19.

An antenna 21 of the noncontact IC card 2 receives the modulated signal or unmodulated signal transmitted from the data communication apparatus 1. If the signal received by the antenna 21 is the unmodulated signal with frequency f₁, a charging circuit 22 rectifies the unmodulated signal to obtain driving power, and stores the driving power in a capacitor 23.

The modulating/demodulating circuit 24 is driven by the power stored in the capacitor 23 of the charging circuit 22. If the signal received by the antenna 21 is the modulated signal with frequency f₁, the modulating/demodulating circuit 24 demodulates the data such as a command from the modulated signal, and carries out processing in response to the data. In addition, if the signal received by the antenna 21 is the unmodulated signal with frequency f₄, the modulating/demodulating circuit 24 modulates the data addressed to the noncontact IC card 2, and supplies the modulated signal to the antenna 21.

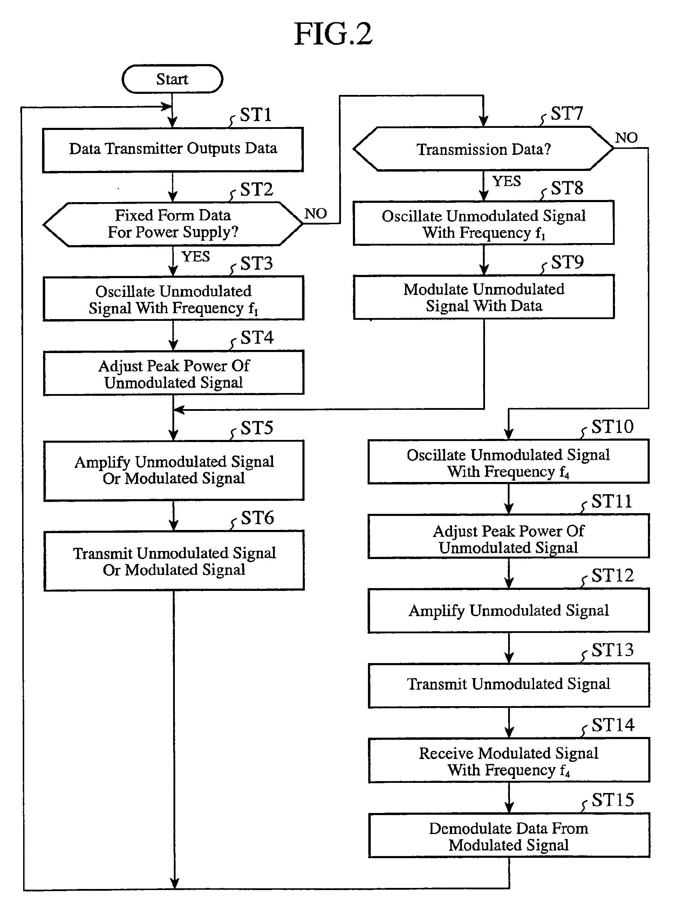

FIG. 2 is a flowchart illustrating a data communication method of the embodiment 1 in accordance with the present invention.

Next, the operation will be described.
The noncontact IC card 2 is not loaded with a power source such as a cell, and hence cannot start its operation unless it is supplied with power from outside.
Thus, before transmitting data such as a command, the data communication apparatus 1 supplies power to the noncontact IC card 2 in a noncontact state.

First, before outputting the transmission data such as a command, the data transmitter 11 of the data communication apparatus 1 supplies the fixed form data for power supply to the RF signal oscillator 12, changeover switches 13 and 16 and pulse modulator 14 (step ST1).
As for the fixed form data for power supply, since it is not meaningful data such as a control command and does not aim at transmitting information, any data contents are allowed.
However, it is preferably such data as clearly distinguishable from the transmission data such as a command or fixed form data for response.

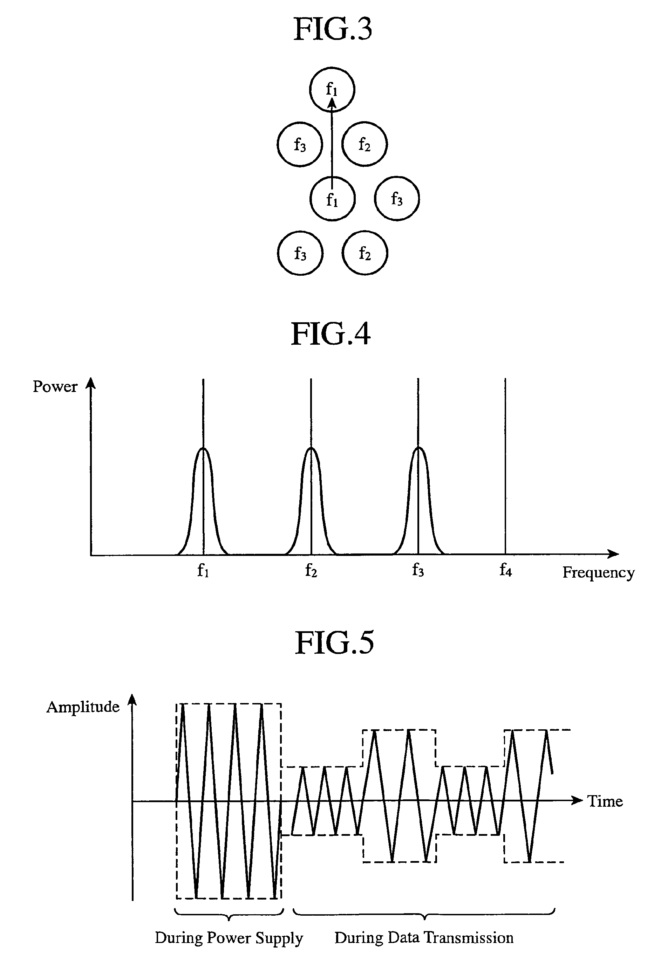

Receiving the data from the data transmitter 11, the RF signal oscillator 12 of the data communication apparatus 1 checks whether the data is the fixed form data for power supply, or the transmission data such as a command, or the fixed form data for response (steps ST2 and ST7).
If the RF signal oscillator 12 recognizes that the data fed from the data transmitter 11 is the fixed form data for power supply, it oscillates an unmodulated signal with preassigned frequency f₁ (step ST3).
Although the description is made assuming that the frequency f₁ is assigned to the data communication apparatus 1, as for the second data communication apparatus 1 installed in its vicinity, it is assumed that one of the frequencies f₁, f₂ and f₃ is assigned thereto as illustrated in FIG. 3 and FIG. 4.

Receiving the data from the data transmitter 11, the changeover switch 13 of the data communication apparatus 1 checks whether the data is the fixed form data for power supply, or the transmission data such as a command, or the fixed form data for response.
If the changeover switch 13 recognizes that the data output from the data transmitter 11 is the fixed form data for power supply, it supplies the unmodulated signal with frequency f₁ oscillated by the RF signal oscillator 12 to the level regulator 15.

Receiving the unmodulated signal with frequency f₁ oscillated by the RF signal oscillator 12, the level regulator 15 of the data communication apparatus 1 adjusts the peak power of the unmodulated signal so that the peak power of the unmodulated signal becomes greater than the peak power of the modulated signal output from the pulse modulator 14 (step ST4).
More specifically, the level regulator 15 regulates the peak power of the unmodulated signal oscillated by the RF signal oscillator 12 in such a manner that the peak power of the unmodulated signal for power supply becomes greater than the peak power of the modulated signal for data transmission (see FIG. 5).

Receiving the data from the data transmitter 11, the changeover switch 16 of the data communication apparatus 1 checks whether the data is the fixed form data for power supply, or the transmission data such as a command, or the fixed form data for response.
When the changeover switch 16 recognizes that the data output from the data transmitter 11 is the fixed form data for power supply, it supplies the unmodulated signal output from the level regulator 15 to the amplifier 17.

Receiving the unmodulated signal with frequency f₁ from the changeover switch 16, the amplifier 17 of the data communication apparatus 1 amplifies the unmodulated signal (step ST5).
Receiving the amplified unmodulated signal from the amplifier 17, the circulator 18 of the data communication apparatus 1 supplies the unmodulated signal to the antenna 19.
Receiving the amplified unmodulated signal from the circulator 18, the antenna 19 of the data communication apparatus 1 radiates the unmodulated signal into space as the signal for power supply, thereby transmitting the unmodulated signal to the noncontact IC card 2 (step ST6).

The antenna 21 of the noncontact IC card 2 receives the unmodulated signal with frequency f₁ transmitted from the data communication apparatus 1.
If the signal received by the antenna 21 is the unmodulated signal with frequency f₁, the charging circuit 22 of the noncontact IC card 2 rectifies the unmodulated signal to obtain the driving power, and stores the driving power in the capacitor 23.

In this way, once the unmodulated signal with frequency f₁ has been transmitted from the antenna 19, the data transmitter 11 of the data communication apparatus 1 supplies the transmission data such as a command to the RF signal oscillator 12, changeover switches 13 and 16 and pulse modulator 14 (step ST1).

Receiving the data from the data transmitter 11, the RF signal oscillator 12 of the data communication apparatus 1 checks whether the data is the fixed form data for power supply, or the transmission data such as a command, or the fixed form data for response (steps ST2 and ST7).
When the RF signal oscillator 12 recognizes that the data output from the data transmitter 11 is the transmission data such as a command, it oscillates the unmodulated signal with preassigned frequency f₁ (step ST8).

Receiving the data from the data transmitter 11, the changeover switch 13 of the data communication apparatus 1 checks whether the data is the fixed form data for power supply, or the transmission data such as a command, or the fixed form data for response.
When the changeover switch 13 recognizes that the data output from the data transmitter 11 is the transmission data, it supplies the unmodulated signal with frequency f₁ oscillated by the RF signal oscillator 12 to the pulse modulator 14.

Receiving the data from the data transmitter 11, the pulse modulator 14 of the data communication apparatus 1 checks whether the data is the fixed form data for power supply, or the transmission data such as a command, or the fixed form data for response.
When the pulse modulator 14 recognizes that the data output from the data transmitter 11 is the transmission data such as a command, it carries out pulse modulation (such as ASK modulation) of the unmodulated signal with frequency f₁ oscillated by the RF signal oscillator 12 in response to the transmission data such as a command, and supplies the modulated signal to the changeover switch 16 (step ST9).

Receiving the data from the data transmitter 11, the changeover switch 16 of the data communication apparatus 1 checks whether the data is the fixed form data for power supply, or the transmission data such as a command, or the fixed form data for response.
When the changeover switch 16 recognizes that the data output from the data transmitter 11 is the transmission data such as a command, it supplies the modulated signal output from the pulse modulator 14 to the amplifier 17.

Receiving the modulated signal with frequency f₁ from the changeover switch 16, the amplifier 17 of the data communication apparatus 1 amplifies the modulated signal (step ST5).
Receiving the amplified modulated signal from the amplifier 17, the circulator 18 of the data communication apparatus 1 supplies the modulated signal to the antenna 19.
Receiving the amplified modulated signal from the circulator 18, the antenna 19 of the data communication apparatus 1 radiates the modulated signal into space as the data signal, and transmits the modulated signal to the noncontact IC card 2 (step ST6).

The antenna 21 of the noncontact IC card 2 receives the modulated signal with frequency f₁ transmitted from the data communication apparatus 1.
When the signal received by the antenna 21 is the modulated signal with frequency f₁, the modulating/demodulating circuit 24 of the noncontact IC card 2 drives itself using the power stored in the capacitor 23 of the charging circuit 22, demodulates the data such as a command from the modulated signal, and carries out processing in response to the data.

Next, to receive the data signal from the noncontact IC card 2, the data transmitter 11 of the data communication apparatus 1 supplies the fixed form data for response to the RF signal oscillator 12, changeover switches 13 and 16 and pulse modulator 14 (step ST1).
As for the fixed form data for response, since it is not meaningful data such as a control command and does not aim at transmitting information, any data contents are allowed.
However, it is preferably such data as clearly distinguishable from the transmission data such as a command or fixed form data for power supply.

Receiving the data from the data transmitter 11, the RF signal oscillator 12 of the data communication apparatus 1 checks whether the data is the fixed form data for power supply, or the transmission data such as a command, or the fixed form data for response (steps ST2 and ST7).
If the RF signal oscillator 12 recognizes that the data fed from the data transmitter 11 is the fixed form data for response, it oscillates an unmodulated signal with preassigned frequency f₄ (step ST10).
Although the description is made assuming that the frequency f₄ is assigned to the data communication apparatus 1, the second data communication apparatus 1 installed in its vicinity is assumed to be assigned one of the frequencies f₄, f₅ and f₆.

Receiving the data from the data transmitter 11, the changeover switch 13 of the data communication apparatus 1 checks whether the data is the fixed form data for power supply, or the transmission data such as a command, cr the fixed form data for response.
If the changeover switch 13 recognizes that the data output from the data transmitter 11 is the fixed form data for response, it supplies the unmodulated signal with frequency f₄ oscillated by the RF signal oscillator 12 to the level regulator 15.

Receiving the unmodulated signal with frequency f₄ oscillated by the RF signal oscillator 12, the level regulator 15 of the data communication apparatus 1 adjusts the peak power of the unmodulated signal so that the peak power of the unmodulated signal becomes greater than the peak power of the modulated signal output from the pulse modulator 14 (step ST11).
More specifically, the level regulator 15 regulates the peak power of the unmodulated signal oscillated by the RF signal oscillator 12 in such a manner that the peak power of the unmodulated signal for response becomes greater than the peak power of the modulated signal for data transmission.

Receiving the data from the data transmitter 11, the changeover switch 16 of the data communication apparatus 1 checks whether the data is the fixed form data for the power supply, or the transmission data such as a command, or the fixed form data for response.
When the changeover switch 16 recognizes that the data output from the data transmitter 11 is the fixed form data for response, it supplies the unmodulated signal output from the level regulator 15 to the amplifier 17.

Receiving the unmodulated signal with frequency f₄ from the changeover switch 16, the amplifier 17 of the data communication apparatus 1 amplifies the unmodulated signal (step ST12).
Receiving the amplified unmodulated signal from the amplifier 17, the circulator 18 of the data communication apparatus 1 supplies the unmodulated signal to the antenna 19.
Receiving the amplified unmodulated signal from the circulator 18, the antenna 19 of the data communication apparatus 1 radiates the unmodulated signal into space as the signal for response, thereby transmitting the unmodulated signal to the noncontact IC card 2 (step ST13).

The antenna 21 of the noncontact IC card 2 receives the unmodulated signal with frequency f₄ transmitted from the data communication apparatus 1.
When the signal received by the antenna 21 is the unmodulated signal with frequency f₄, using the power stored in the capacitor 23 of the charging circuit 22, the modulating/demodulating circuit 24 of the noncontact IC card 2 drives itself, modulates the data addressed to the noncontact IC card 2, and supplies the modulated signal with frequency f₄ to the antenna 21.
Thus, the modulated signal with frequency f₄ is transmitted from the noncontact IC card 2 to the data communication apparatus 1 as the data signal.

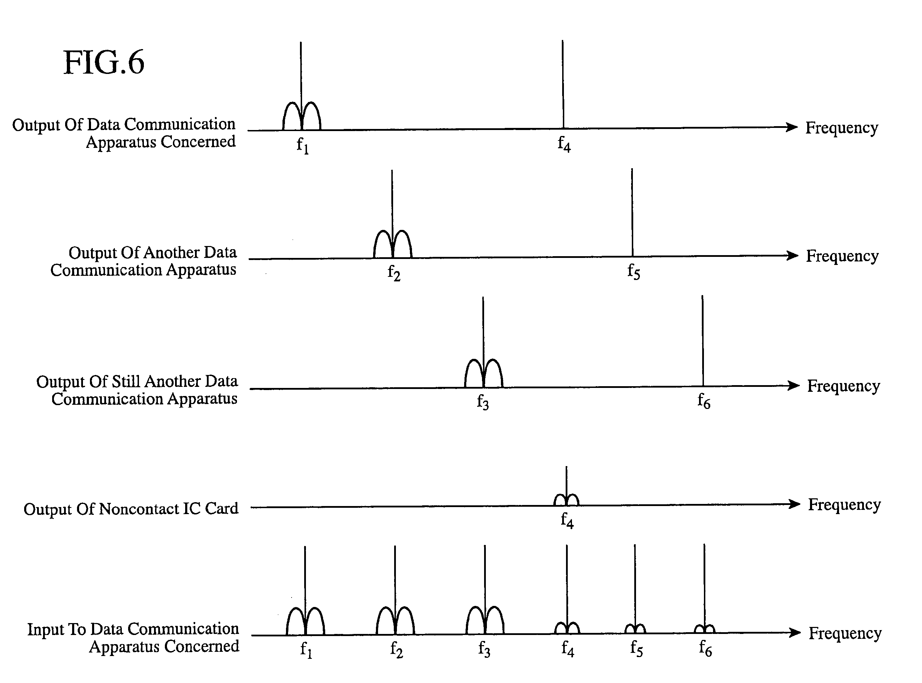

The antenna 19 of the data communication apparatus 1 receives the modulated signal with frequency f₄, that is, the data signal transmitted from the noncontact IC card 2 (step ST14).
Thus, as illustrated in FIG. 6, the antenna 19 receives the modulated signal with frequency f₄ which is the data signal at the timing of transmitting the unmodulated signal with frequency f₄ which is the signal for response.

When the antenna 19 of the data communication apparatus 1 receives the modulated signal with frequency f₄ which is the data signal, the unmodulated signal with frequency f₄ which is the signal for response is superimposed on the modulated signal. However, even if the second data communication apparatus 1 transmits the modulated signal with frequency f₁ which is the data signal or the unmodulated signal with frequency f₁ which is the signal for power supply, they do not become interference waves because their frequency differs from the frequency f₄ of the modulated signal which is the data signal transmitted from the noncontact IC card 2.
The demodulating circuit 20 of the data communication apparatus 1 demodulates the data from the modulated signal received by the antenna 19 (step ST15).

As is clear from the foregoing description, the present embodiment 1 is configured in such a manner that it generates the signal for response different from the signal for power supply or from data signal in the frequency, and receives the data signal transmitted from the noncontact IC card 2 at the timing of transmitting the signal for response. Thus, the present embodiment 1 offers an advantage of being able to demodulate the modulated signal transmitted from the noncontact IC card 2 correctly without being affected by the modulated signal transmitted from the second data communication apparatus.

### EMBODIMENT 2

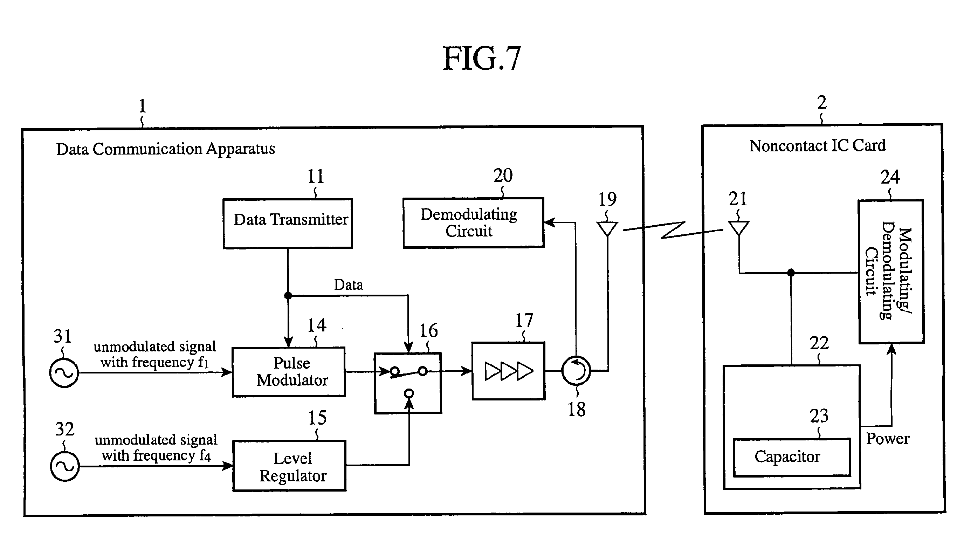

FIG. 7 is a block diagram showing a configuration of a data communication apparatus of an embodiment 2 in accordance with the present invention. In FIG. 7, since the same reference numerals as those of FIG. 1 designate the same or like portions to those of FIG. 1, their description will be omitted here.
An RF signal oscillator 31 oscillates an unmodulated signal with frequency f₁, and an RF signal oscillator 32 oscillates an unmodulated signal with frequency f₄.
The RF signal oscillators 31 and 32 constitute a data signal generating means.

Although the foregoing embodiment 1 is described by way of example in which the data communication apparatus 1 transmits, when transmitting the signal for power supply to the noncontact IC card 2, the unmodulated signal with frequency f₁ without modulation, this is not essential. For example, the pulse modulator 14 can modulate the unmodulated signal with frequency f₁, and transmit the modulated signal with frequency f₁ to the noncontact IC card 2 as the signal for power supply.

In this case, if the data output from the data transmitter 11 is the fixed form data for power supply or the transmission data such as a command, the pulse modulator 14 carries out the pulse modulation (such as ASK modulation) of the unmodulated signal with frequency f₁ oscillated by the RF signal oscillator 31 in response to the data, and supplies the modulated signal to the changeover switch 16.
The present embodiment 2 eliminates the need for the changeover switch 13 of FIG. 1.

In addition, although the foregoing embodiment 1 is described by way of example in which when the data communication apparatus 1 transmits the signal for response to the noncontact IC card 2, it does not modulate the unmodulated signal with frequency f₄, this is not essential. For example, the pulse modulator 14 can modulate the unmodulated signal with frequency f₄, and transmits the modulated signal with frequency f₄ to the noncontact IC card 2 as the signal for response.

### EMBODIMENT 3

The foregoing embodiment 1 is described by way of example in which the demodulating circuit 20 of the data communication apparatus 1 demodulates the data from the modulated signal received by the antenna 19. More specifically, it demodulates the data as follows.

The antenna 19 of the data communication apparatus 1 receives the modulated signal with frequency f₄, which is the data signal from the noncontact IC card 2, at the timing of transmitting the unmodulated signal with frequency f₄, which is the signal for response. Thus the received signal of the antenna 19 includes both the data signal (the modulated signal with frequency f₄) and the signal for response (the unmodulated signal with frequency f₄).

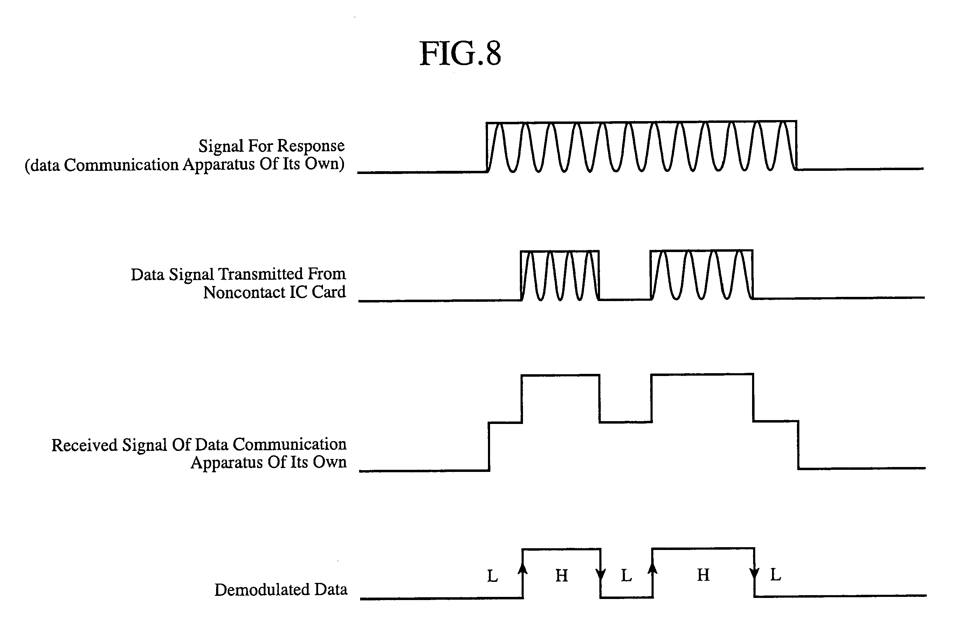

Accordingly, the demodulating circuit 20 of the data communication apparatus 1 detects the rising edge and falling edge of the received signal of the antenna 19 including the data signal (the modulated signal with frequency f₄) and the signal for response (the unmodulated signal with frequency f₄).
Then, as shown in FIG. 8, the demodulating circuit 20 recognizes that the data makes an "L" to "H" transition when it detects the rising edge of the received signal, and that the data makes an "H" to "L" transition when it detects the falling edge of the received signal, thereby demodulating the data.

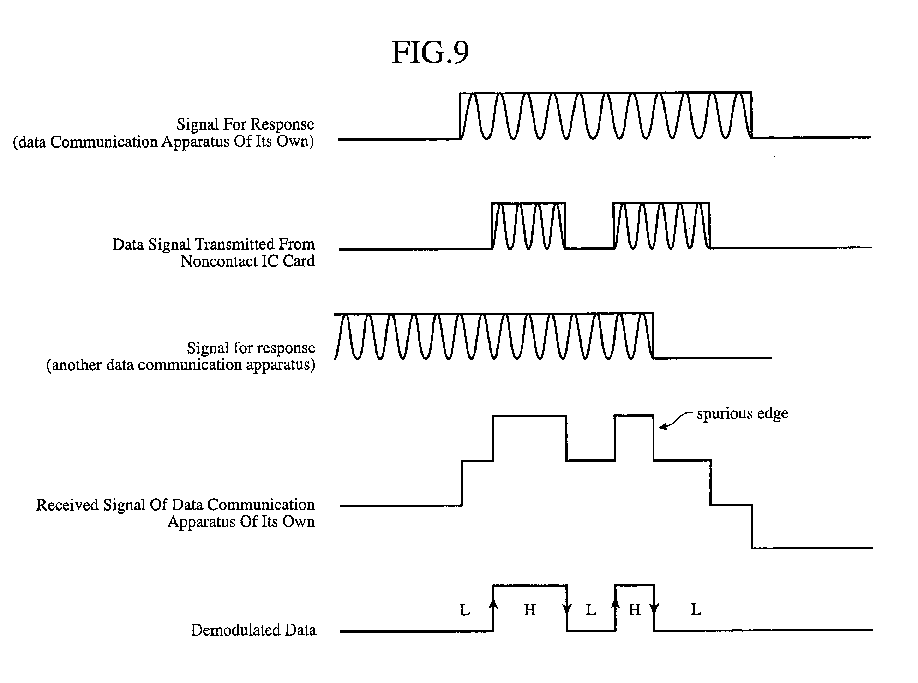

However, if a second data communication apparatus 1 is present which transmits the signal for response (the unmodulated signal with frequency f₄), the received signal of the antenna 19 also includes the signal for response.
In this case, if the signal for response transmitted from the second data communication apparatus 1 interrupts during the reception of the data signal transmitted from the noncontact IC card 2 as shown in FIG. 9, a spurious falling edge appears in the received signal of the antenna 19.
Since the demodulating circuit 20 of the data communication apparatus 1 detects the spurious falling edge during the data demodulation, an error occurs.

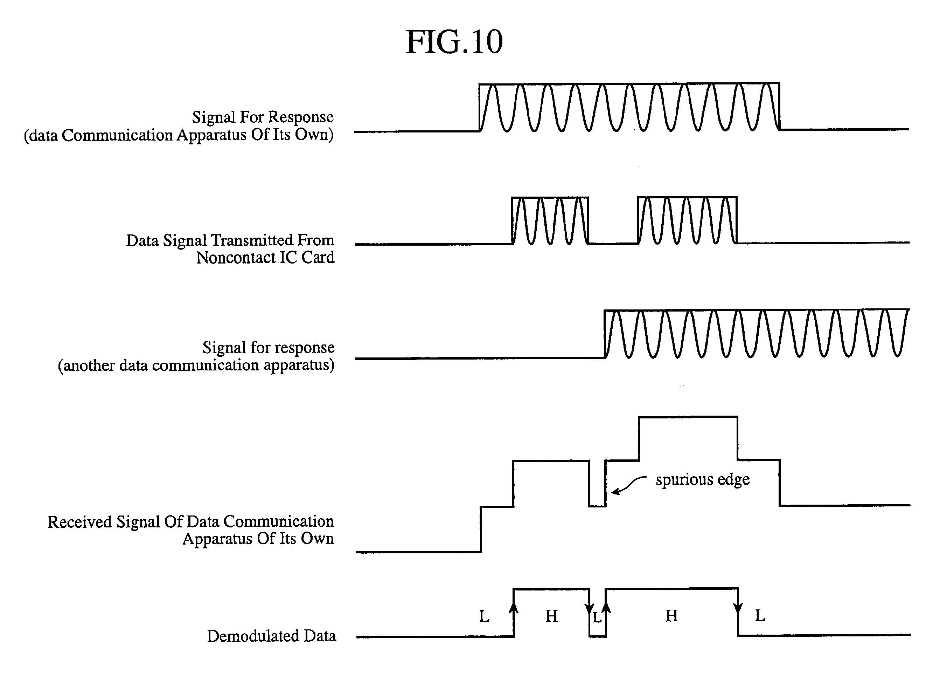

Likewise, if the signal for response transmitted from the second data communication apparatus 1 occurs during the reception of the data signal transmitted from the noncontact IC card 2 as shown in FIG. 10, a spurious rising edge appears in the received signal of the antenna 19.
Since the demodulating circuit 20 of the data communication apparatus 1 detects the spurious rising edge during the data demodulation, an error occurs.

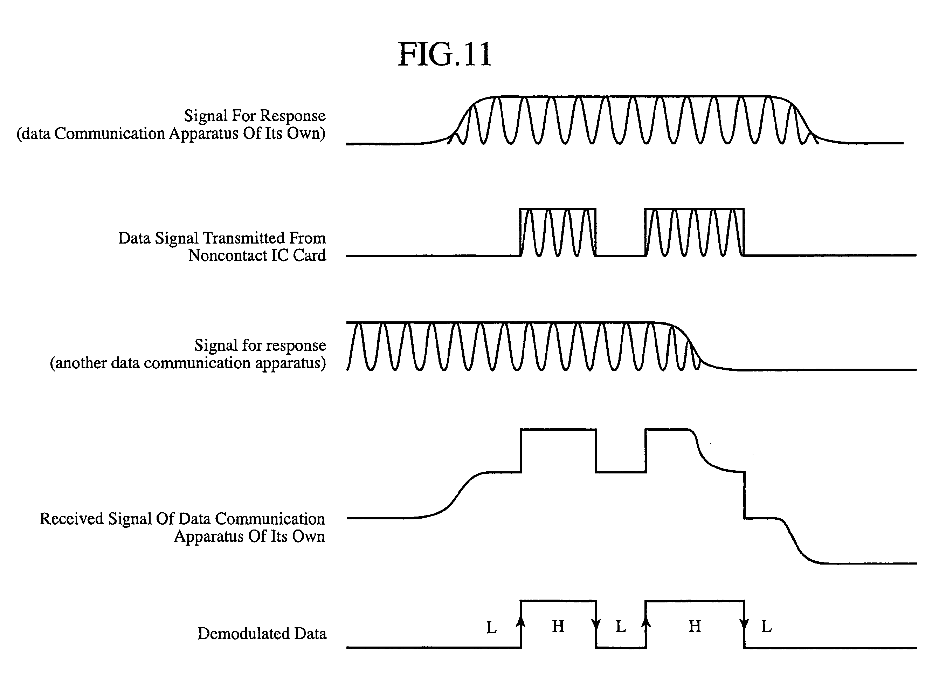

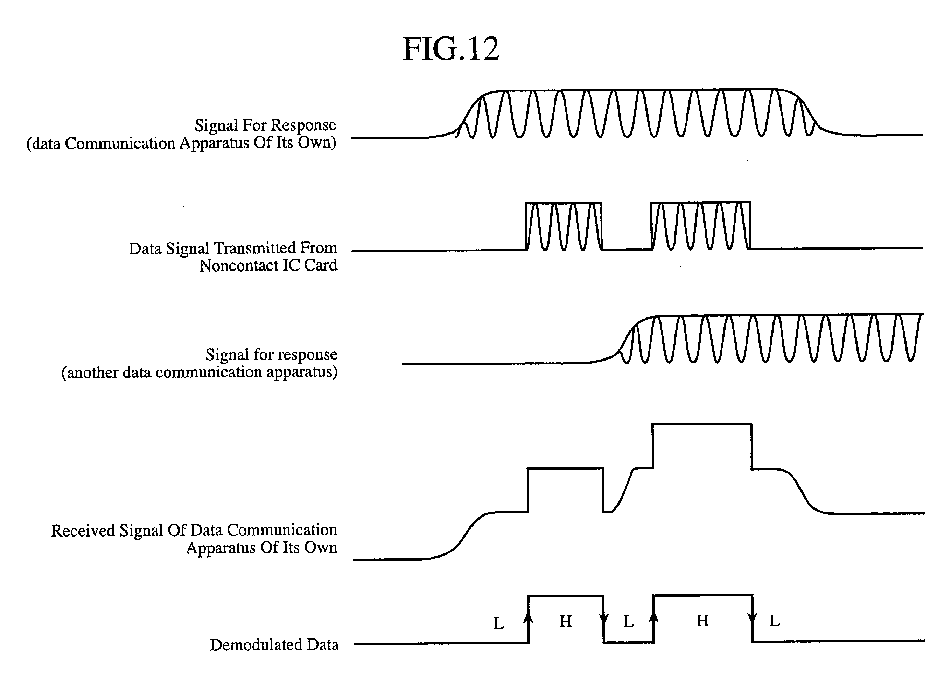

In view of this, to prevent the demodulation error of the data due to the signal for response transmitted from the second data communication apparatus 1, the present embodiment 3 smoothes the waveforms of the rising edges and falling edges of all the signals for response transmitted by the data communication apparatuses 1 (not only the data communication apparatus 1 of its own, but also all the data communication apparatuses including the second data communication apparatus) as shown in FIG. 11 and FIG. 12.
More specifically, when adjusting the level of the unmodulated wave with frequency f₄, the level regulator 15 of the data communication apparatus 1 gradually raises the level at the rising edge portion, and gradually reduces the level at the falling edge portion, thereby smoothing the waveforms of the rising edges and falling edges of the signal for response.

In this way, even if the signal for response transmitted from the second data communication apparatus 1 occurs or interrupts during the reception of the data signal, the received signal of the antenna 19 varies only smoothly without producing any edges, thereby being able to demodulate the data correctly.

As is clear from the foregoing description, the present embodiment 3 is configured in such a manner that it generates the signal for response with smooth rising and falling waveforms. Thus, the present embodiment 3 offers an advantage of being able to demodulate the data from the noncontact IC card 2 correctly, even if the signal for response transmitted from the second data communication apparatus 1 occurs or interrupts during the reception of the data signal.

### EMBODIMENT 4

The foregoing embodiments 1-3 are described by way of example in which the data communication apparatus 1 modulates the unmodulated signal with frequency f₁, to transmit the modulated signal with frequency f₁, to the noncontact IC card 2 as the data signal, and transmits the unmodulated signal with frequency f₁ to the noncontact IC card 2 as the signal for power supply. In this case, if the level regulator 15 raises the level of the unmodulated signal with frequency f₁, to extend the chargeable distance to the noncontact IC card 2, the unmodulated signal can reach the second data communication apparatus 1 over a considerable distance, which sometimes causes the signal interference.

In view of this, the present embodiment 4 assigns to the signal for power supply a frequency f₅ different from the frequencies f₁, f₂ and f₃ assigned to the data signal.
More specifically, when the data output from the data transmitter 11 is the fixed form data for power supply, the RF signal oscillator 12 of FIG. 1 oscillates the unmodulated signal with frequency f₅, and the changeover switch 13 supplies the unmodulated signal with frequency f₅ to the level regulator 15.

Accordingly, even if the unmodulated signal with frequency f₅, which is the signal for power supply, reaches the second data communication apparatus 1, it has no effect on the communication of the modulated signal with frequency f₁ which is the data signal. Thus, the present embodiment 4 offers an advantage of being able to extend the chargeable distance to the noncontact IC card 2.

### INDUSTRIAL APPLICABILITY

As described above, the data communication apparatus and data communication method in accordance with the present invention are suitable for the noncontact radio communication equipment that has no power source such as a cell and that cannot start its operation until it receives power from outside.

## Claims

1. A data communication apparatus comprising:
data signal generating means for generating a data signal when transmitting data to noncontact radio communication equipment;
signal-for-response generating means for generating a signal for response with a frequency different from that of the data signal generated by said data signal generating means when receiving a data signal from said noncontact radio communication equipment;
transmitting means for transmitting the data signal generated by said data signal generating means, or the signal for response generated by said signal-for-response generating means; and
receiving means for receiving the data signal transmitted from said noncontact radio communication equipment while said transmitting means is transmitting the signal for response.

2. The data communication apparatus according to claim 1, wherein the signal for response said signal-for-response generating means generates is an unmodulated continuous wave.

3. The data communication apparatus according to claim 2, wherein said signal-for-response generating means generates the signal for response with a smooth rising edge waveform.

4. The data communication apparatus according to claim 2, wherein said signal-for-response generating means generates the signal for response with a smooth falling edge waveform.

5. The data communication apparatus according to claim 1, further comprising signal-for-power-supply generating means for generating a signal for power supply when supplying power to said noncontact radio communication equipment, wherein said transmitting means transmits the signal for power supply generated by said signal-for-power-supply generating means.

6. The data communication apparatus according to claim 5, wherein said signal-for-power-supply generating means generates the signal for power supply with a frequency different from that of the data signal generated by said data signal generating means.

7. A data communication method comprising:
a data signal generating step of generating a data signal when transmitting data to noncontact radio communication equipment;
a signal-for-response generating step of generating a signal for response with a frequency different from that of the data signal generated by the data signal generating step when receiving a data signal from the noncontact radio communication equipment;
a transmitting step of transmitting the data signal generated by the data signal generating step, or the signal for response generated by the signal-for-response generating step; and
a receiving step of receiving the data signal transmitted from the noncontact radio communication equipment while the transmitting step is transmitting the signal for response.
